# EUROPÄISCHE PATENTSCHRIFT

(11) **EP 1 890 785 B1**
(45) Veröffentlichungstag und Bekanntmachung des Hinweises auf die Patenterteilung: **24.08.2016**
(21) Anmeldenummer: 06753182.2
(22) Anmeldetag: 19.05.2006
(51) Int. Cl.: B01F 15/06, B01B 1/00, B01F 5/04, B01J 4/00

(54) **KOMPAKTER TOTALVERDAMPFER**
COMPACT TOTAL EVAPORATOR
ÉVAPORATEUR COMPACT COMPLET

(30) Priorität: 20.05.2005 DE 102005023956
(43) Veröffentlichungstag der Anmeldung: 27.02.2008
(73) Patentinhaber: Universität Stuttgart, 70174 Stuttgart (DE)
(72) Erfinder: EIGENBERGER, Gerhart, 67435 Neustadt/Weinstrasse (DE); FRIEDRICH, Gerhard, 75482 Illingen (DE); FREUND, Andreas, 70197 Stuttgart (DE); KOLIOS, Grigorios, 79540 Lörrach (DE); MERTEN, Clemens, 70195 Stuttgart (DE); BERNNAT, Jens, 70771 Leinefelden-Echterdingen (DE)
(74) Vertreter: Herzog, Günter
(86) Internationale Anmeldenummer: PCT/DE2006/000866
(87) Internationale Veröffentlichungsnummer: WO 2006/125417

(56) Entgegenhaltungen:
- DE-A1- 19 723 680
- DE-C1- 4 029 260

## Beschreibung

Die Erfindung betrifft einen kompakten Totalverdampfer, vorzugsweise für kleine bis mittlere Flüssigkeitsströme (wenige g/h bis einige kg/h) in einer neuartigen, und insbesondere in einer zerlegbaren und damit einfach zu reinigenden Ausführung. Die Erfindung ist weitgehend baugleich auch für die kontrollierte Vermischung, Verdampfung und/oder Reaktion eines oder mehrerer Fluide nutzbar.

Die kontrollierte, kontinuierliche Totalverdampfung extern vorgegebener kleiner und mittlerer Flüssigkeitsströme ist in vielen technischen Anwendungen erforderlich. Beispiele sind die gezielte Dosierung von Flüssigkeitsdampf in Labor- und Technikumsanlagen und in kleintechnischen Produktionsanlagen wie dezentralen Kohlenwasserstoff-Reformern zur Erzeugung von Wasserstoff oder Synthesegas. Dabei wird eine möglichst pulsationsfreie Totalverdampfung der zugeführten Flüssigkeit mit schnellem Ansprechverhalten auf Lastwechsel gefordert.

In herkömmlichen technischen Verdampfern mit freier Verdampfungsoberfläche sowie in Umlaufverdampfern findet bei der Verdampfung einer Mischung zunächst eine Verdampfung der Leichtersieder statt, sodass sich die Schwersieder so lange in der Blase anreichern, bis sich ein Gleichgewicht einstellt. Das bedeutet, dass sprungförmige Änderungen des Durchsatzes bei Mehrkomponentenverdampfung auch mit (unerwünschten) Konzentrationsänderungen verbunden sind. Die Totalverdampfung findet daher häufig als Fallfilmverdampfung im Ringspalt zwischen zwei konzentrischen, beheizten Rohren statt. Ein Beispiel dafür findet sich in DE 40 29 260 C1. Allerdings ist die Einstellung eines gleichmäßigen Fallfilms für kleine Flüssigkeitsdurchsätze problematisch. Außerdem neigen auch diese Ringspaltverdampfer wie alle Totalverdampfer zu einer stark pulsierenden Dampfproduktion, wobei größere Flüssigkeitsbereiche überhitzen und dann schlagartig verdampfen.

In DE 197 23 680 B4 wird ein Totalverdampfer für kleine Flüssigkeitsströme beschrieben, wobei die zu verdampfende Flüssigkeit in einem oder in mehreren Kapillarrohren oder Bohrungen zuerst durch einen Kaltraum und nachfolgend durch einen Heißraum geführt wird. Dabei wird durch die Temperierung des Kaltraums eine Vorverdampfung von Flüssigkeit sicher verhindert. Die Totalverdampfung findet anschließend in den Kapillarrohren bzw. Bohrungen des beheizten Heißraums auf einer kurzen Strecke statt, sodass eine stoßfreie, gleichmäßige Verdampfung erreicht wird. Durch Einbauten wie Wendeln oder Drahtspiralen in den Verdampferröhrchen wird ferner ein Herausschleudern von unverdampften Flüssigkeitströpfchen verhindert. Die Röhrchen oder Bohrungen münden in einen Dampfraum, der als Pulsationsdämpfer etwaige Schwankungen in der Dampfproduktion minimiert.

Mit dieser Vorrichtung lässt sich eine kontrollierte, pulsationsarme Totalverdampfung über einem weiten Durchsatzbereich sicher durchführen. Von Nachteil sind allerdings zum einen der komplexe Aufbau und die aufwendige Fertigung mit mehreren engen und längeren Bohrungen bzw. Röhrchen und den für jede Bohrung vorzusehenden Einbauten. Zum Zweiten kommt es zu einer kaum mehr zu beseitigenden Verstopfung der engen Verdampfungskanäle, wenn sich an ihren Wandungen Feststoffbeläge bilden. Das kann durch nicht flüchtige Verunreinigungen der zu verdampfenden Flüssigkeit oder durch eine allmähliche Belagbildung z. Bsp. infolge der Bildung von Crackprodukten bei der Verdampfung von Kohlenwasserstoffen der Fall sein. Eine weitere Beschränkung stellt die elektrische Beheizung oder die Beheizung über einen fluiden Wärmeträger dar. Gerade im Hinblick auf eine energetisch günstige technische Anwendung ist es vorteilhaft, die erforderliche Verdampfungswärme aus heißen Abgasen oder über die Verbrennung von Restgasen zur Verfügung zu stellen. Zur Verhinderung von Crackprodukten bei der Verdampfung hochsiedender Kohlenwasserstoffe kann es außerdem erforderlich sein, Wasser oder Luft im Verdampfungsbereich gezielt zuzugeben.

Es stellt sich somit die Aufgabe, den in DE 40 29 260 C1 und DE 197 23 680 B4 dokumentierten Stand der Technik im Hinblick auf die genannten Probleme und Anforderungen weiterzuentwickeln. Diese Aufgabe wird erfindungsgemäß wie folgt gelöst: Im Gegensatz zu DE 40 29 260 C1 wird die nach dem Stand der Technik sinnvolle Trennung des Totalverdampfers in einen Kaltraum zur Verhinderung einer Vorverdampfung der Flüssigkeit, einen anschließenden Heißraum mit engem Strömungsquerschnitt zur schnellen Verdampfung der Flüssigkeit und einen nachfolgenden Dampfraum zur kontrollierten Überhitzung des Dampfes und zur Dämpfung etwaiger Pulsationen prinzipiell beibehalten. Allerdings werden die Verdampfungskanäle nicht wie in DE 197 23 680 B4 durch enge Bohrungen oder als dünne Kapillarröhrchen realisiert. Vielmehr findet die Verdampfung entweder in einem glatten, oder vorzugsweise in einem profilierten Ringraum mit kleinem Strömungsquerschnitt zwischen zwei ineinander steckenden, konzentrischen, zylindrischen oder konusförmigen Rohren statt. Im Falle eines nicht profilierten Ringraums oder Ringraumbereichs ist es ein weiteres erfindungsgemäßes Merkmal, diesen Bereich mit strömungsführenden Strukturen, z. Bsp. Drahtgewebe oder profilierten dünnen Blechen zu versehen.

Der unabhängige Anspruch beschreibt die Erfindung.

Wie weiter unten gezeigt, hat eine geeignete apparative Gestaltung den Vorteil, dass der Kompaktverdampfer einfach zu öffnen ist, um z. Bsp. die Verdampferkanäle zu reinigen oder z. Bsp. auch mit unterschiedlichen Katalysatoren zu beschichten. In einer weiteren Ausgestaltung wird durch ein Verdrehen oder Verschieben der konzentrischen Rohre zueinander erreicht, dass sich die Oberflächenbeläge oder Reaktionsprodukte lösen und ausgespült werden, ohne dass der Verdampfer geöffnet werden muss.

Die für Verdampfung und Überhitzung notwendige Wärme wird entweder nach dem Stand der Technik durch elektrische Heizelemente in den konzentrischen Rohren, durch einen flüssigen oder gasförmigen Wärmeträger und/oder durch die homogene und/oder katalytische Verbrennung von fluiden Brennstoffen eingetragen. Im Falle eines gasförmigen heißen Wärmeträgers besteht eine erfindungsgemäße Gestaltung darin, den Wärmeträger spiralförmig um das äußere konzentrische Rohr zu führen und die Wärmeübertragungsfläche durch spiralförmige Nuten im äußeren konzentrischen Rohr zu vergrößern. Im Falle einer Verbrennung eines Gases wird das Brenngas oder die für die Verbrennung benötigte Luft ebenfalls spiralförmig um das äußere konzentrische Rohr geführt, wobei der zweite Reaktand an einer oder mehreren, über den Umfang und/oder die Länge der Verdampferzone verteilten Stellen zudosiert wird, wodurch sich eine gleichmäßige Wärmefreisetzung ergibt. Auch hier wird die Wärmeübertragungsfläche zweckmäßigerweise durch spiralförmige Nuten im äußeren konzentrischen Rohr vergrößert. Im Fall einer katalytischen Verbrennung wird der Katalysator vorzugsweise in den Spiralnuten oder als Beschichtung auf der Außenwand der Spiralnuten des äußeren konzentrischen Rohres angeordnet. Die zum Zünden der Verbrennungsreaktion erforderliche Temperatur ist beispielsweise durch eine im innersten konzentrischen Rohr integrierte elektrische Heizung einstellbar.

In einer Ausführungsform enthält der die Verdampfungsstrecke bildende Ringspalt in die Außen- und/oder die Innenseite der ineinander steckenden Rohre eingearbeitete Kanäle, wobei diese Kanäle vorzugsweise gerade, spiralförmig und/oder zickzack-und/oder mäanderförmig verlaufen sollen. Dabei haben die zickzack- und/oder mäanderförmige sowie die spiralförmige Anordnungen den Vorteil, dass im Inneren der Kanäle befindliche Flüssigkeitströpfchen während der Verdampfung fortlaufend an die Kanalwand geschleudert werden, sodass eine vollständige Verdampfung im Unterschied zu DE 197 23 680 B4 auch ohne weitere Einbauten in den Verdampfungskanälen erreicht wird. Eine besondere Ausgestaltung stellt die gegensinnige spiralförmige Nutung der Außen- und/oder Innenwände dar, wobei sich die nutenförmigen Kanäle jeweils über dem Umfang kreuzen.

Sollen mehrere, ineinander lösliche oder nicht ineinander lösliche Fluide gemeinsam verdampft und/oder vermischt werden, so besteht ein erfindungsgemäßes Vorgehen darin, die Fluide in Strömungsrichtung hintereinander dem Ringraum über Bohrungen oder Ringnuten zuzuführen und auf diese Weise vor, nach oder während des Verdampfens zu vermischen. In einer besonderen erfindungsgemäßen Ausgestaltung werden die Fluide so auf unterschiedlichen, sich jeweils stromab kreuzenden nutenförmigen Kanälen verteilt, sodass sie sich erst im Kreuzungspunkt der Kanäle vermischen. Dabei liegen diese Kreuzungspunkte vor oder hinter dem Beginn des Heißraums, sodass die Fluide entweder im bereits vermischten Zustand verdampfen, oder sich erst während oder nach ihrer Verdampfung vermischen.

Eine entsprechende Vorrichtung lässt sich vorteilhaft auch zur Durchführung von Reaktionen zwischen den zugeführten flüssigen oder gas- oder dampfförmigen Fluiden einsetzen. In einer weiteren Ausgestaltung der Erfindung können die Strömungskanäle im Ringraum zwischen Innen- und Außenrohr dazu ganz oder bereichsweise mit einem Katalysator für die durchzuführenden Reaktionen versehen sein. Alternativ kann die Reaktion auch durch in den Ringraum eingelegte, strömungsführende Katalysatorstrukturen beeinflusst werden.

Weitere Vorteile und Merkmale der Erfindung ergeben sich aus der nachfolgenden Beschreibung von Ausführungsbeispielen. Die Erfindung soll im Folgenden anhand von Zeichnungen näher erläutert werden. Dabei zeigen:
Figur 1 den Querschnitt durch einen erfindungsgemäßen Kompaktverdampfer mit elektrischer Beheizung (obere Hälfte) bzw. mit Beheizung über ein Heißgas oder ein Brenngas (untere Hälfte),
Figur 2 die Abwicklung der mit mehreren spiralförmigen Nuten als Strömungs- und Verdampfungskanäle versehenen Außenfläche des Innenrohres oder Innenfläche des Außenrohres des Kompaktverdampfers von Figur 1,
Figur 3 einen Kompaktverdampfer zur gemeinsamen Verdampfung von zwei getrennt zugeführten Fluiden, oder eine Vorrichtung zur Vermischung, Verdampfung und/oder Reaktion zweier getrennt zugeführter Fluide,
Figur 4 die Abwicklung der gekreuzten Strömungskanäle für die beiden getrennt zugeführten Fluide nach Figur 3.

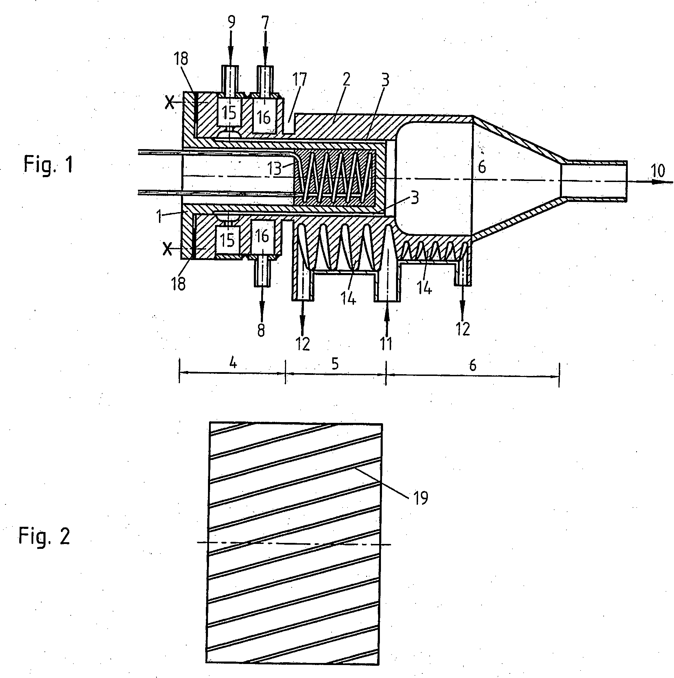

Figur 1 zeigt eine Grundform der Erfindung im Querschnitt, in der oberen Hälfte mit elektrischer Beheizung, in der unteren Hälfte alternativ oder zusätzlich mit Beheizung über ein Heißgas oder ein Brenngas oder ein Wärmeträgerfluid. Der Totalverdampfer besteht aus zwei Hauptteilen, dem konzentrischen Außenrohr 2 und dem in dieses passgenau eingeschobenen Innenrohr 1. Das Innenrohr 1 wird im Verdampfungsbereich 5 über die elektrische Heizung 13 beheizt. In seine Außenfläche und/oder in die Innenfläche des Außenrohres werden zweckmäßigerweise Nuten 19 als Strömungsund Verdampfungskanäle eingearbeitet, wobei auch ein Ringspalt ohne eingearbeitete Nuten mit oder ohne in den Ringraum eingelegte strömungsführende Strukturen aus z. Bsp. Drahtgewebe oder profilierten dünnen Blechen eine erfindungsgemäße Ausführung darstellt. Die zu verdampfende Flüssigkeit tritt über den Zulauf 9 und einen ringförmigen Verteilerkanal 15 ein, strömt durch den zwischen Innen- und Außenrohr (1, 2) liegenden Ringspalt 3 oder durch die in die Innenfläche des Außenrohres 2 und/oder die in die Außenfläche des Innenrohres 1 eingearbeiteten Nuten 19 und verdampft im Verdampfungsbereich 5 vollständig. Der gebildete Dampf gelangt in den Dampfraum 6, in dem er ggf. weiter überhitzt wird. Etwaige Druckpulsationen werden bei Austritt aus den engen Verdampfungskanälen 19 bzw. dem Ringspalt 3 in den Dampfraum 6 gedämpft. Der Dampfstrom verlässt den Dampfraum 6 über den Dampfauslass 10.

Entscheidend für eine pulsationsarme vollständige Verdampfung ist es, die Verdampfung auf den Verdampfungsbereich 5 zu beschränken und eine Vorverdampfung im Verteilerkanal 15 sicher zu verhindern. Dazu dient ein Kühlmittel, das über die (vorzugsweise tangential angeordneten) Zu- und Ablaufstutzen 7, 8 geführt wird und im Ringraum 16 zirkuliert. Außerdem ist der Heißraum 5 vom Kaltraum 4 durch Ringnuten 17 im Außenrohr 2 und ggf. auch im Innenrohr 1 abgesetzt, sodass die axiale Wärmeleitung zwischen Heiß- und Kaltraum minimiert wird. In einer Ausführungsform wird die zu verdampfende Flüssigkeit hinreichend kalt, d.h. sicher unterhalb der Siedetemperatur, zugeführt oder es wird fortlaufend ein Teilstrom der zugeführten Flüssigkeit über einen externen Kühler (nicht gezeigt) im Kreis gefahren. Dann entfallen die Trennwände zwischen den Ringräumen 15 und 16 sowie der Stutzen 7. In einer weiteren Ausführungsform wird die Kühlung des Kaltraumes 4 über außen am Kaltraum angebrachte Kühlrippen ohne zusätzliches Kühlmittel ausgeführt.

Die Verdampfungskanäle 19 werden als Nuten auf der Außenseite des Innenrohrs 1 und/oder auf der Innenseite des Außenrohrs 2 angebracht. Der Strömungsquerschnitt eines einzelnen Verdampfungskanals liegt zweckmäßig im Bereich 0,05 bis 3 mm², seine Länge zwischen 1 und 25 cm. Die Anzahl der Verdampfungskanäle 19 richtet sich nach der zu verdampfenden Flüssigkeitsmenge, wobei die Kanäle vorzugsweise jeweils parallel zueinander und in gleichem Abstand voneinander angeordnet sind. Die Verdampfungskanäle 19 verlaufen vorzugsweise spiralförmig und/oder zickzack- und/oder mäanderförmig. Dies bewirkt, dass Flüssigkeitströpfchen durch die Zentrifugalkraft bzw. die Umlenkungen wiederholt an die Kanalwand geschleudert werden und so vollständig verdampfen. Bei spiralförmiger Führung überstreicht jede Spiralnut zweckmäßigerweise einen Umfangsbereich zwischen 60 ° und 360 °. Fehlen die nutenförmigen Verdampfungskanäle 19, so erfolgt die Verdampfung im Ringspalt 3 zwischen Innen- und Außenrohr (1, 2). In dieser Ausführungsform beträgt die Spaltweite vorzugsweise nicht mehr als einige Zehntel Millimeter.

In Figur 1 sind Innen- und Außenrohr 1, 2 zylinderförmig ausgeführt. Auch eine konusförmige Ausführungsform beider Rohre erweist sich als zweckmäßig. Sie gewährleistet einen guten Wärmekontakt von Innen- und Außenrohr, wenn die Durchströmung in den nutenförmigen Verdampfungskanälen erfolgt. Es hat sich herausgestellt, dass ein Konuswinkel zwischen 2° und 15° zweckmäßig ist, dies soll aber keine Einschränkung sein. In beiden Fällen werden Innen- und Außenrohr 1, 2 gegeneinander abgedichtet (z. Bsp. durch Dichtung 18) und entweder fest oder lösbar, z. Bsp. über Schrauben, miteinander verbunden. Letzteres erlaubt eine einfache Demontage zum Zwecke der Reinigung, falls die Verdampfungskanäle durch Belagbildung verstopfen. Außerdem kann so ein in den Verdampfungskanälen angeordneter Katalysator ausgetauscht werden.

In einer weiteren erfindungsgemäßen Ausführungsform wird durch periodisches oder kontinuierliches Verdrehen oder Verschieben des Innenrohres relativ zum Außenrohr ein sich bildender Belag gelockert und mit dem verdampfenden Fluid ausgespült. Dieses Ausspülen wird erleichtert, wenn der Verdampfungsbereich 5 als Ringspalt 3 (ohne nutenförmige Verdampfungskanäle 19) ausgebildet ist, wobei sich die Spaltweite zwischen Kaltraum 4 und Dampfraum 6 kontinuierlich oder stufenförmig ändert oder konstant bleibt.

Die elektrische Heizung 13 wird wie in Figur 1 zweckmäßig in Form von zylindrischen und/oder konischen Heizpatronen in entsprechenden Bohrungen des Innenrohres 1 und/oder (nicht dargestellt) als Heizschale um das Außenrohr 2 angeordnet. In einer weiteren Ausführungsform sind mehrere Heizpatronen in entsprechenden Bohrungen des Innenrohres angeordnet. Anstelle oder zusätzlich zur elektrischen Heizung wird die Verdampfungswärme auch über ein heißes (flüssiges oder gasförmiges) Fluid zugeführt. Im Falle eines Heißgases wird dazu die Außenfläche des Außenrohres 2 erfindungsgemäß mit spiralförmigen Windungen 14 versehen. Damit wird die Wärmeübertragungsfläche erhöht und gleichzeitig das Heißgas gleichmäßig über dem Umfang verteilt und geführt. In Figur 1, unten erfolgt die Heißgaszufuhr 11 vorzugsweise tangential in einen Ringraum. Von dort wird es von den beiden gegensinnig angeordneten Spiralen 14 zu den jeweiligen Ablaufstutzen 12 geführt. Die beiden Strömungswege sind in Figur 1, unten, entsprechend dem unterschiedlichen Wärmebedarf für Verdampfung und Überhitzung mit unterschiedlichen Strömungsquerschnitten versehen.

Die Anordnung von Figur 1, unten, ist auch einsetzbar, wenn die benötigte Wärme über eine homogene oder katalytische Verbrennung eines Brenngases erzeugt werden soll. Das entsprechende Brenngas-/Luftgemisch wird dann ebenfalls über den Zulaufstutzen 11 zugeführt und verteilt sich entsprechend auf Heißraum 5 und Dampfraum 6. Alternativ wird Brenngas und/oder Luft über den Stutzen 11 zugeführt. Der zweite Reaktand wird dann getrennt davon in den Ringraum zugeführt bzw. nachdosiert, wobei die Zufuhr zweckmäßigerweise örtlich verteilt an mehreren Stellen über dem Umfang erfolgt, sodass sich die gewünschte, axial verteilte, aber über dem Umfang gleichmäßige Wärmefreisetzung ergibt. Wird die Verbrennungsreaktion katalytisch unterstützt, wird der Katalysator entweder in Schüttungsform in den Nuten der Spirale 14 oder als Beschichtung auf der Oberfläche des profilierten Außenrohres 2 aufgebracht. Letzteres sorgt für eine direkte Wärmeeinkopplung ohne größere Gasübertemperaturen. Im Falle einer katalytisch unterstützten Verbrennung wird die Reaktion z. Bsp. über eine im Innenrohr angebrachte elektrische Heizung 13 gezündet.

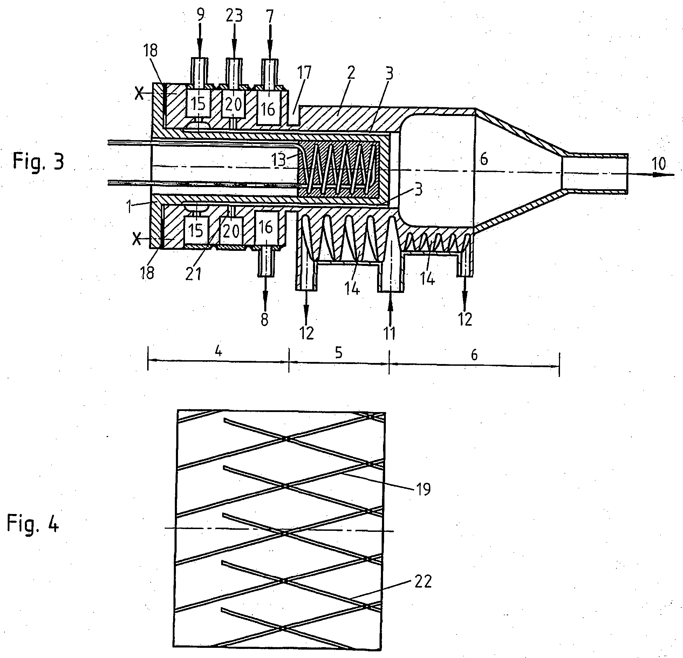

Ist es erforderlich, die zu verdampfende Flüssigkeit vor, während oder unmittelbar nach der Verdampfung mit weiteren (flüssigen oder gasförmigen) Fluiden zu mischen, so erfolgt diese Mischung vor, nach oder im Verdampfungsbereich 5. Das zeigen beispielhaft Figur 3 und 4. Eine entsprechende Vorgehensweise bietet sich z. Bsp. an, wenn die Verdampfung des Fluids alleine zu erhöhter Belagbildung führen würde. Ein Beispiel ist die Verdampfung eines Kohlenwasserstoffgemischs mit hochsiedenden Anteilen wie Diesel. Durch eine Ko-Verdampfung mit Wasser oder unter Luft- bzw. Sauerstoffzufuhr wird die Bildung von Belägen aus Crackprodukten weitgehend unterdrückt.

Für die Zuführung und Vermischung der gemeinsam zu verdampfenden Fluide existieren zahlreiche erfindungsgemäße Möglichkeiten. So werden ein oder mehrere Fluide dem Ringspalt 3 über hintereinander liegende ringförmige Verteilerkanäle 15, 20 zugeführt. In einer Ausführungsform für die gemeinsame Verdampfung zweier Fluide gemäß Fig. 3 und 4 werden jeweils ein Fluid in rechtsdrehende und ein anderes Fluid in linksdrehende Spiralnuten 19 zugeführt. An den Kreuzungspunkten der rechtsund linksdrehenden Spiralen werden die beiden Fluide vermischt. Durch entsprechende geometrische Gestaltung der Spiralnuten 19 liegt der erste Kreuzungspunkt vor, in, oder am Ende der Verdampfungszone 5. Dabei erfolgt die Zufuhr des einen zu verdampfenden Fluids wie in Figur 1 über einen Ringkanal 15 in entsprechende spiralförmige Verdampfungskanäle 19. Das zweite Fluid wird über den Zulauf 23 in einen eigenen Ringraum 20 zugeführt und von dort auf die Strömungskanäle 22 verteilt. Diese sind gegenüber den Verdampfungskanälen 19 als gegensinnige Spiralnuten ausgeführt und beginnen erst in der Höhe des Ringraums 20. Der Ringraum 20 ist durch Öffnungen mit der Oberfläche des Innenrohres 1 verbunden. Diese Öffnungen sind so positioniert, dass sie am Beginn der Strömungskanäle 22 für das zweite Fluid münden, sodass das zweite Fluid zunächst nur in diese Kanäle eintritt. Wie die Abwicklung der Spiralkanäle in Figur 4 zeigt, kreuzen sich die Spiralkanäle 19 und 22 im Bereich des Heißraums 5, sodass die Vermischung und Verdampfung vor, hinter oder an der Kreuzungsstelle beginnt.

Anstelle von gegensinnig laufenden Spiralnuten sind auch andere, sich kreuzende Kanalverläufe erfindungsgemäß. In einer weiteren erfindungsgemäßen Ausgestaltung enden jeweils die Kanäle 19 (oder die Kanäle 22) bereits an den ersten Kreuzungspunkten, sodass die Fluide anschließend in einem gemeinsamen Kanal 22 (oder 19) weitergeführt werden.

Die in den zwei vorigen Abschnitten beschriebene und exemplarisch in Fig. 3 und 4 gezeigte Vorrichtung lässt sich auch vorteilhaft für die kontrollierte Durchführung chemischer Reaktionen einsetzen, wenn die zu reagierenden Fluide auf die verschiedenen Ringspaltkanäle verteilt werden, sodass die Reaktion nach ihrem Zusammentreffen einsetzt oder beeinflusst wird.

In einer weiteren Ausgestaltung der Erfindung werden die Strömungskanäle im Ringraum zwischen Innen- und Außenrohr dazu ganz oder bereichsweise mit einem Katalysator für die durchzuführende Reaktion versehen. Alternativ wird die Reaktion auch durch in den Ringraum eingelegte strömungsführende Katalysatorstrukturen beeinflusst.

Handelt es sich um eine Reaktion mit großer Wärmetönung, so besteht eine weitere erfindungsgemäße Ausgestaltung darin, dass die Zuführungen 7, 11 und die Auslässe 8, 12 zur Verteilung bzw. Zirkulation eines geeigneten Wärmeträgers genutzt werden.

### Bezeichnungen:

- 1: Innenrohr
- 2: Außenrohr
- 3: Ringspalt zwischen Innen- und Außenrohr
- 4: Kaltraum
- 5: Verdampfungsbereich, beheizt
- 6: Dampfraum
- 7: Kühlmittel-Zulauf
- 8: Kühlmittel-Ablauf
- 9: Fluidzulauf
- 10: Dampfauslass
- 11: Heißgaszufuhr
- 12: Heißgasablauf
- 13: Elektrische Heizung
- 14: Heißgas-Verteilerspirale
- 15: Fluid-Verteilerkanal (Ringraum)
- 16: Kühlmittel-Ringraum
- 17: Ringnuten zur Reduzierung der axialen Wärmeleitung
- 18: Dichtung zwischen Außen- und Innenrohr
- 19: Ringspaltkanäle in Form von Nuten, Kerben oder Einfräsungen
- 20: Ringraum zur Verteilung weiterer Fluide
- 21: Zuführungsbohrungen für weitere Fluide
- 22: Ringspalt-Kanäle für weitere Fluide
- 23: Zulauf für weitere Fluide

## Patentansprüche

1. Totalverdampfer für Flüssigkeiten, bestehend aus einem Kaltraum (4) zur Verhinderung einer Vorverdampfung, einem sich anschließenden Verdampfungsbereich (5) mit engem Strömungsquerschnitt zur schnellen Verdampfung der Flüssigkeit und einem nachfolgenden Dampfraum (6) zur Pulsationsdämpfung und zur kontrollierten Überhitzung des Dampfes,
**dadurch gekennzeichnet,**
**dass** der Verdampfungsbereich (5) aus dem Spalt zwischen konzentrisch ineinander liegenden zylindrischen oder konusförmigen Rohrstücken gebildet wird und die für die Verdampfung und Überhitzung notwendige Wärme durch elektrische Beheizung (13), durch ein heißes Fluid, durch katalytische und/oder homogene Verbrennung über die Wand der konzentrischen Rohre eintragbar ist, wobei die konzentrischen Rohrstücke im Verdampfungsbereich (5) passgenau ineinander liegen und einzelne Verdampfungskanäle in die Innen- und/oder Außenwände der konzentrischen Rohrstücke eingearbeitet sind.

2. Totalverdampfer nach Anspruch 1,
**dadurch gekennzeichnet,**
**dass** die konzentrisch ineinander liegenden Rohrstücke durch Aufschrumpfen, Verlöten oder Verschweißen fest miteinander verbunden sind, oder dass sie sich gegeneinander verdrehen, verschieben und/oder lösen lassen.

3. Totalverdampfer nach Anspruch 1 und 2,
**dadurch gekennzeichnet,**
**dass** die Verdampfungskanäle in Form zick-zack- und/oder mäanderförmiger und/oder in Form gerader und/oder spiralförmiger und/oder sich kreuzender Nuten ausgeführt sind.

4. Totalverdampfer nach Anspruch 1 bis 3,
**dadurch gekennzeichnet,**
**dass** die ineinander liegenden und die Wände des Verdampfungsbereichs (5) bildenden konzentrischen Rohre ständig oder in periodischen Abständen axial und/oder in Umfangsrichtung gegeneinander verschiebbar sind.

5. Totalverdampfer nach Anspruch 1 bis 4,
**dadurch gekennzeichnet,**
**dass** der Querschnitt der einzelnen Verdampfungskanäle 0,05 bis 3 mm², ihre Kanallänge 10 bis 250 mm beträgt und die Verdampfungskanäle einen Umfangswinkelbereich zwischen 0° und 360° überstreichen.

6. Totalverdampfer nach Anspruch 1 bis 5,
**dadurch gekennzeichnet,**
**dass** die Verdampfungswärme von einem heißen Gas über das äußerste konzentrische Rohr einbringbar ist, wobei das Heißgas durch am Außenrohr angebrachte äußere Nuten spiralförmig um das Außenrohr herumführbar ist.

7. Totalverdampfer nach Anspruch 6,
**dadurch gekennzeichnet,**
**dass** anstelle eines heißen Gases ein sauerstoff- bzw. brennstoffhaltiges Gas durch die spiralförmigen äußeren Nuten zuführbar ist und die Verbrennung in den Nuten homogen oder an einem Katalysator abläuft, wobei die für die Verbrennung nötigen Komponenten entweder vorgemischt zuführbar sind oder das Brenngas bzw. das sauerstoffhaltige Gas örtlich verteilt an mehreren Stellen eintragbar ist.

8. Totalverdampfer nach Anspruch 7,
**dadurch gekennzeichnet,**
**dass** die zum Zünden der Verbrennungsreaktion erforderliche Temperatur über eine elektrische Beheizung (13) der konzentrischen Rohre erzeugt wird.

9. Totalverdampfer nach Anspruch 1 bis 8,
**dadurch gekennzeichnet,**
**dass** im Kaltraum (4) eine Vorverdampfung der Flüssigkeit dadurch verhindert wird, dass der Kaltraum (4) durch eine Kühlvorrichtung entsprechend temperierbar ist oder ein Teil der zu verdampfenden Flüssigkeit fortlaufend über einen äußeren Kühler umpumpbar ist.

## Claims

1. Total evaporator for liquids, comprising a cold chamber (4) to prevent pre-evaporation, an adjoining evaporation region (5) having a narrow flow cross-section for fast evaporation of the liquid, and a subsequent vapour chamber (6) for pulsation damping and controlled superheating of the vapour,
**characterised in that**
the evaporation region (5) is formed by the gap between concentrically nested cylindrical and/or conical tube sections, and the heat required for the evaporation and superheating processes can be supplied by electric heating (13), by a hot fluid, by catalytic and/or homogenous combustion via the wall of concentric tubes, wherein the concentric tube sections in the evaporation region (5) fit precisely inside each other and individual evaporation channels incorporated in the inner and/or outer walls of the concentric tube sections.

2. Total evaporator according to claim 1,
**characterised in that**
the concentrically nested tube sections are permanently connected to one another by shrink fitting, soldering or welding, or they can be twisted, slid and/or detached with respect to each other.

3. Total evaporator according to claims 1 and 2,
**characterised in that**
the evaporation channels have a zigzag and/or meander-like shape and/or they are designed straight and/or as spirals and/or intersecting grooves.

4. Total evaporator according to claims 1 to 3,
**characterised in that**
the concentrically nested tubes forming the walls of the evaporation region (5) can be displaced axially and/or circumferentially relative to each other continuously or periodically.

5. Total evaporator according to claims 1 to 4,
**characterised in that**
the cross section of the individual evaporation channels is 0.05 to 3 mm³, the length thereof is 10 to 250mm, and the evaporation channels encompass a circumferential angular range between 0° and 360°.

6. Total evaporator according to claims 1 to 5,
**characterised in that**
the evaporation heat can be introduced by a hot gas via the outermost concentric tube, wherein the hot gas can be transported around the outer tube through outer grooves created spirally on the outer tube.

7. Total evaporator according to claim 6,
**characterised in that**
an oxygen- or fuel-containing gas can be transported through the spiral outer grooves instead of a hot gas, and combustion in the grooves proceeds homogeneously or on a catalyst, wherein the components necessary for combustion can either be added in premixed form, or the combustion gas or oxygen-containing gas can be introduced in spatially distributed manner, at multiple positions.

8. Total evaporator according to claim 7,
**characterised in that**
the temperature required to ignite the combustion reaction is generated via an electric heater (13) of the concentric tubes.

9. Total evaporator according to claims 1 to 8,
**characterised in that**
pre-evaporation of the liquid in the cold chamber (4) is prevented by the fact that the temperature of the cold chamber (4) can be controlled correspondingly by a cooling device, or that a part of the liquid to be evaporated can be recirculated continuously by pumping through an external cooler.

## Revendications

1. Évaporateur total pour des liquides, constitué d'un espace froid (4) destiné à empêcher une pré-évaporation, d'une zone d'évaporation (5) qui s'y raccorde avec une section transversale d'écoulement étroite pour l'évaporation rapide du liquide et d'un espace à vapeur (6) successif pour amortir les pulsations et pour surchauffer de manière contrôlée la vapeur,
**caractérisé en ce que**
la zone d'évaporation (5) est formée par l'interstice entre des pièces tubulaires cylindriques ou coniques, placées de manière concentrique les unes dans les autres et **en ce que** la chaleur nécessaire pour l'évaporation et la surchauffe est susceptible d'être introduite par chauffage (13) électrique, par un fluide chaud, par une combustion catalytique et/ou homogène par l'intermédiaire de la paroi des tubes concentriques, les pièces tubulaires concentriques dans la zone d'évaporation (5) étant placées de manière ajustée les unes dans les autres et **en ce que** des canaux d'évaporation individuels sont ménagés dans les parois intérieures et/ou extérieures des pièces tubulaires concentriques.

2. Évaporateur total selon la revendication 1,
**caractérisé en ce que** les pièces tubulaires placées de manière concentrique les uns dans les autres sont fixement assemblées les unes aux autres par frettage, brasage ou soudage ou **en ce qu'**il est possible de les faire tourner, de les déplacer les unes par rapport aux autres et/ou de les détacher.

3. Évaporateur total selon la revendication 1 et la revendication 2,
**caractérisé en ce que** les canaux d'évaporation sont réalisés en forme de zigzag et/ou en forme de méandres et/ou sous la forme de rainures rectilignes et/ou hélicoïdales et/ou qui se croisent.

4. Évaporateur total selon la revendication 1 à 3,
**caractérisé en ce que** les tubes concentriques placés les uns dans les autres et formant les parois de la zone d'évaporation (5) sont déplaçables en permanence ou à intervalles périodiques les uns par rapport aux autres en direction axiale et/ou en direction périphérique.

5. Évaporateur total selon la revendication 1 à 4,
**caractérisé en ce que** la section transversale des canaux d'évaporation individuels est de 0,05 à 3 mm², leur longueur de canal est de 10 à 250 mm et **en ce que** les canaux d'évaporation balayent un angle inscrit d'un ordre compris entre 0° et 360°.

6. Évaporateur total selon la revendication 1 à 5,
**caractérisé en ce que** la chaleur d'évaporation est susceptible d'être introduite par un gaz chaud, par l'intermédiaire du tube concentrique le plus à l'extérieur, le gaz chaud pouvant être conduit sous forme hélicoïdale autour du tube extérieur, via des rainures extérieures ménagées sur le tube extérieur.

7. Évaporateur total selon la revendication 6, **caractérisé en ce qu'**en remplacement d'un gaz chaud, un gaz contenant de l'oxygène ou des combustibles peut être alimenté via les rainures extérieures hélicoïdales et **en ce que** la combustion dans les rainures se déroule de manière homogène ou sur un catalyseur, soit les composants nécessaires pour la combustion pouvant être alimentés en étant pré-mélangés ou le gaz de combustion ou le gaz contenant de l'oxygène pouvant être introduit en étant localement distribué en plusieurs endroits.

8. Évaporateur total selon la revendication 7,
**caractérisé en ce que** la température requise pour amorcer la réaction de combustion est générée par l'intermédiaire d'un chauffage (13) électrique des tubes concentriques.

9. Évaporateur total selon la revendication 1 à 8,
**caractérisé en ce que**
dans l'espace froid (4), une pré-évaporation de liquide est empêchée **en ce que** l'espace froid (4) peut être tempéré en conséquence par un dispositif de refroidissement ou **en ce qu'**une partie du liquide qui doit s'évaporer peut être pompée en continu via un refroidisseur extérieur.
